# EUROPÄISCHE PATENTSCHRIFT

(11) **EP 3 318 436 B1**
(45) Veröffentlichungstag und Bekanntmachung des Hinweises auf die Patenterteilung: **19.08.2020**
(21) Anmeldenummer: 17197407.4
(22) Anmeldetag: 19.10.2017
(51) Int. Cl.: B60J 7/00, B60R 13/06, B62D 25/07, B60R 13/07

(54) **DACHSYSTEM FÜR EIN KRAFTFAHRZEUG**
ROOF SYSTEM FOR A MOTOR VEHICLE
SYSTÈME DE TOIT DE VÉHICULE AUTOMOBILE

(30) Priorität: 02.11.2016 DE 102016221484
(43) Veröffentlichungstag der Anmeldung: 09.05.2018
(73) Patentinhaber: BOS GmbH & Co. KG, 73760 Ostfildern (DE)
(72) Erfinder: Heidan, Michael, 70569 Stuttgart (DE)
(74) Vertreter: Patentanwälte Ruff, Wilhelm, Beier, Dauster & Partner mbB

(56) Entgegenhaltungen:
- DE-A1- 10 053 530
- DE-A1-102007 017 136
- DE-B- 1 199 147
- DE-U1- 20 111 650
- JP-A- H04 266 526
- JP-A- 2006 151 205
- JP-A- 2015 013 582

## Beschreibung

Die Erfindung betrifft ein Dachsystem für ein Kraftfahrzeug nach dem Oberbegriff des Anspruchs 1 oder des Anspruchs 2.

Aus der DE 1 199 147 B ist ein Dachsystem für ein Kraftfahrzeug bekannt, das einen Schiebedachrahmen mit einem als Wasserrinne dienenden U-Profil aufweist. Die Wasserrinne ist mit Strömungshemmnissen in Form einer Vielzahl von über die Länge der Wasserrinne verteilt angeordneten, quer verlaufenden Vorsprüngen geringer Höhe versehen. Ein schmaler durchlaufender Kanal entlang der Wasserrinne ist nicht mit Vorsprüngen versehen, um einen hindernisfreien Durchlauf und demzufolge einen glatten, ungestörten Abfluss einer üblicherweise auftretenden kleinen Wassermenge zu gewährleisten.

Aus der JP H04266526 A ist ein weiteres Dachsystem für ein Kraftfahrzeug bekannt, bei der eine Wasserrinne eines Dachrahmens mit alternierend über die Länge und die Breite der Wasserrinne verteilt angeordneten, quaderförmigen Schwallkörpern versehen ist.

Weitere Dachsysteme sind für Personenkraftwagen allgemein bekannt. Derartige Dachsysteme sind entweder als Schiebedachsysteme gestaltet, bei denen wenigstens ein Dachelement zwischen einer einen Dachausschnitt verschließenden und einer den Dachausschnitt freigebenden Stellung verlagerbar ist. Alternativ weisen die Dachsysteme feststehende Glasdachelemente auf, die lediglich dazu vorgesehen sind, in den Fahrzeuginnenraum des Personenkraftwagens mehr Licht eindringen zu lassen.

Bei allen Dachsystemen muss ein Entwässerungssystem vorgesehen sein, um Wasser, das von außen in den Bereich des Fahrzeugdaches und damit in dem Bereich des Dachsystems gelangt, zu sammeln und definiert abzuleiten.

Aufgabe der Erfindung ist es, ein Dachsystem der eingangs genannten Art zu schaffen, das eine gegenüber dem Stand der Technik verbesserte Entwässerung ermöglicht.

Diese Aufgabe wird durch die Merkmale der Ansprüche 1 oder 2 gelöst. Hierdurch wird zuverlässig vermieden, dass Wasser in einen Fahrzeuginnenraum des Kraftfahrzeugs oder in dachseitige Hohlräume einer Fahrzeugkarosserie des Kraftfahrzeugs dringen kann. Die erfindungsgemäße Lösung eignet sich sowohl für Dachsysteme, die wenigstens ein bewegliches Dachelement aufweisen, wie insbesondere Schiebe- oder Hubdachsysteme, als auch für Dachsysteme, bei denen das wenigstens eine Dachelement fest mit dem Trägerrahmen verbunden ist.

Letztgenannte Dachsysteme weisen vorzugsweise zwei Glasdachelemente auf, die nicht geöffnet werden können, aber aufgrund ihrer Transparenz zur Erhöhung der Helligkeit des Fahrzeuginnenraumes beitragen. Die Schwallschutzkörper blockieren eine Wasserströmung in Richtung zu einem Abfluss hin nicht. Entsprechendes Wasser kann je nach Ausgestaltung der Schwallschutzkörper unterhalb der Schwallschutzkörper oder neben den Schwallschutzkörpern vorbeifließen. Vielmehr dienen sie lediglich als Wellen- oder Schwallbrecher, um zu vermeiden, dass sich Wassermengen bei entsprechenden Beschleunigungen oder Verzögerungen des Kraftfahrzeugs zu hoch aufbauen. Die erfindungsgemäße Lösung gewährleistet, dass entsprechend in der Wasserrinne geführtes Wasser nicht über einen oberen Rand der Wasserrinne hinaus austreten kann. Die Schwallschutzkörper können einstückig aus der Wasserrinne ausgeformt oder separat hergestellt und lösbar oder unlösbar mit der Wasserrinne verbunden sein.

Erfindungsgemäß sind die Schwallschutzkörper als zylindrisch ausgeführte Strömungspfosten gestaltet. Die Strömungspfosten ragen von dem Boden der Wasserrinne aus nach oben ab. Die Strömungspfosten sind vorzugsweise mittig am Boden der Wasserrinne angeordnet, so dass Wasser beidseitig der Strömungspfosten vorbeiströmen kann.

Erfindungsgemäß sind die Schwallschutzkörper als von einer Bodenfläche der Wasserrinne nach oben abragende Noppen gestaltet, die alternierend in unterschiedlichen Richtungen ausgerichtet sind. Die Noppen sind vorzugsweise einstückig aus der Bodenfläche ausgeformt.

Erfindungsgemäß sind die Noppen in Längsrichtung der Bodenfläche der Wasserrinne alternierend versetzt zueinander schräg ausgerichtet. Die Noppen erstrecken sich jeweils über einen Teilbereich einer Breite der Wasserrinne, so dass entsprechendes Schwallwasser beidseitig der Noppen vorbeifließen kann. Die Noppen sind derart schräg ausgerichtet und alternierend versetzt zueinander positioniert, dass sich jeweils eine Umlenkung der Wasserströmung und demzufolge eine Reduzierung der Strömungsgeschwindigkeit ergibt. Zudem bewirken die Noppen vorzugsweise eine turbulente Strömung.

Erfindungsgemäß sind die Noppen als längserstreckte Stege gestaltet. Vorzugsweise sind die Noppen alternierend gegensinnig zueinander gekrümmt. In Längsrichtung der Wasserrinne gesehen sind demzufolge jeweils alternierend die einen und die anderen Stege im Uhrzeigersinn bzw. gegen den Uhrzeigersinn gekrümmt. Die Krümmung ist vorzugsweise bogenförmig ausgefürt.

In Ausgestaltung der Erfindung ist der Boden der Wasserrinne auf wenigstens einer Seite jedes Schwallschutzkörpers durchgängig in Längsrichtung der Wasserrinne fortgeführt. Der Boden weist demzufolge eine permanente, zumindest geringfügige Neigung in Richtung eines Ablaufes der Wasserrinne auf, so dass Wasser permanent und stetig entlang der Wasserrinne in Richtung wenigstens eines Ablaufes fließen kann.

In weiterer Ausgestaltung der Erfindung ist die Wasserrinne fester Teil des Trägerrahmens. Vorzugsweise sind mehrere Wasserrinnen in dem Trägerrahmen integriert, denen jeweils in Eckbereichen des Trägerrahmens Abläufe zugeordnet sind, die in Schlauchleitungen münden, die durch entsprechende Fahrzeugkarosseriesäulen hindurch zu einem Fahrzeugunterboden führen, um das Wasser dorthin abzuleiten.

In weiterer Ausgestaltung der Erfindung ist die Wasserrinne dem Dachelement zugeordnet. Das Dachelement kann als bewegliches Dachelement oder als feststehendes Dachelement gestaltet sein. Bei dieser Ausgestaltung erstreckt sich die wenigstens eine Wasserrinne vorzugsweise in Fahrzeugquerrichtung und ist vorzugsweise einem vorderen oder einem hinteren Stirnrandbereich des jeweiligen Dachelementes zugeordnet. Bei einem beweglichen Dachelement wird die Wasserrinne gemeinsam mit dem Dachelement verlagert. Die Wasserrinne kann direkt an dem Dachelement befestigt sein oder mit Ausstellhebeln einer Verlagerungsmechanik für das Dachelement verbunden sein.

In weiterer Ausgestaltung der Erfindung ist die Wasserrinne an einem Stirnendbereich mit einem Abfluss versehen, der zu einem wasserführenden Längsabschnitt einer Führungsrinne des Trägerrahmens hin offen ist. Dadurch erfolgt eine Ableitung des Schwallwassers aus der Wasserrinne in einen Nassbereich des Trägerrahmens, sofern die Wasserrinne dem Dachelement zugeordnet ist und sich quer zur Längsbewegungsrichtung des Dachelementes in Querrichtung des Dachelementes über seine gesamte Breite erstreckt.

In weiterer Ausgestaltung der Erfindung ist der Abfluss stirnendseitig der Wasserrinne durch eine Prallwand flankiert. Die Prallwand stoppt das Schwallwasser und leitet es in den Abfluss ab.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung einen Dachbereich eines Personenkraftwagens mit einer Ausführungsform eines erfindungsgemäßen Dachsystems,
- Fig. 2: eine Ausführungsform eines erfindungsgemäßen Dachsystems für einen Dachbereich gemäß Fig. 1,
- Fig. 3: in vergrößerter, perspektivischer Schnittdarstellung einen Ausschnitt des Dachbereiches nach Fig. 1 mit einem Dachsystem gemäß Fig. 2,
- Fig. 4: in vergrößerter perspektivischer Darstellung einen Ausschnitt des Dachsystems nach den Fig. 2 und 3,
- Fig. 5: in perspektivischer Darstellung eine Ausführungsform eines nicht zur Erfindung gehörenden Dachsystems für den Einsatz bei einem Dachbereich gemäß Fig. 1,
- Fig. 6: in vergrößerter perspektivischer Darstellung einen Querschnitt durch den Dachbereich nach Fig. 1 mit einer Ausführungsform eines Dachsystems gemäß Fig. 5,
- Fig. 7: in vergrößerter Darstellung einen Ausschnitt des Dachsystems nach Fig. 5,
- Fig. 8: zeigt ausschnittsweise eine weitere Ausführungsform eines erfindungsgemäßen Dachsystems mit einer einem beweglichen Dachelement zugeordneten Wasserrinne,
- Fig. 9: in anderer perspektivischer Darstellung die Ausführungsform gemäß Fig. 8 und
- Fig. 10: in perspektivischer, teilweiser geschnittener Darstellung die Ausführungsform gemäß den Fig. 8 und 9.

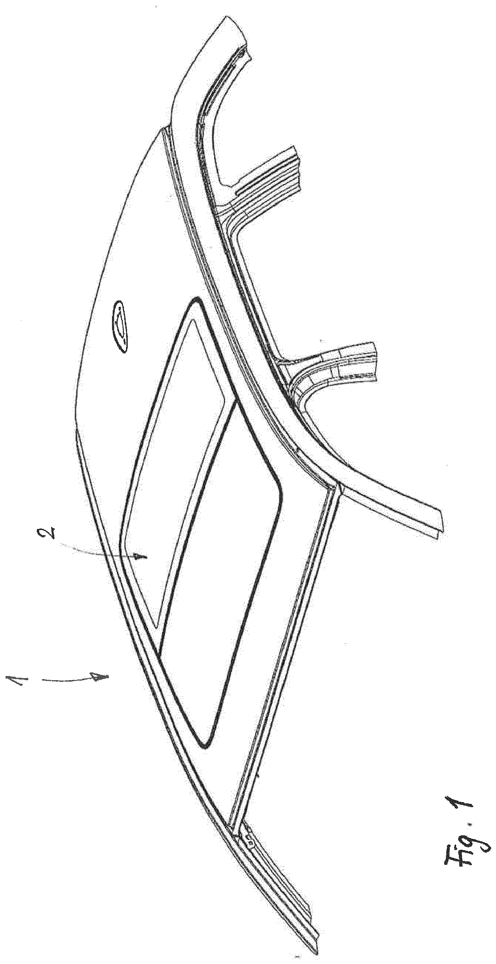

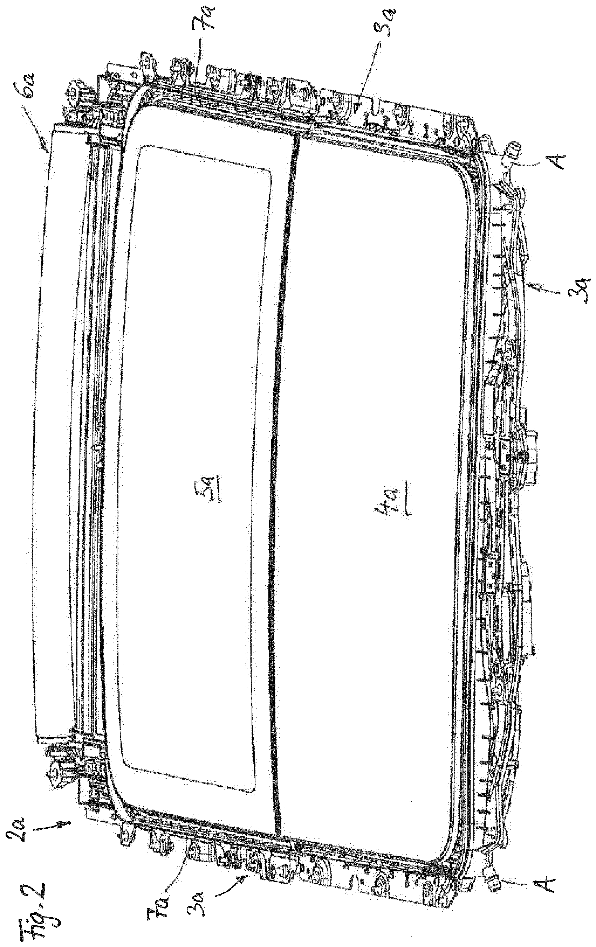

Ein Personenkraftwagen weist gemäß Fig. 1 einen Dachbereich 1 auf, der einen Fahrzeuginnenraum überspannt. In dem Dachbereich 1 ist ein Dachsystem 2 integriert, das in einen Dachausschnitt des Dachbereichs 1 eingefügt und fest mit entsprechenden Abschnitten einer Fahrzeugkarosserie im Dachbereich 1 verbunden ist. Das Dachsystem 2 ist gemäß den Fig. 2 bis 4 und 5 bis 7 jeweils als Schiebedachsystem 2a, 2b ausgeführt, die nachfolgend anhand der Fig. 2 bis 7 näher beschrieben werden. Beide Schiebedachsysteme 2a, 2b entsprechen dem Dachsystem 2 gemäß Fig. 1 und sind alternativ in den Dachbereich 1 integrierbar. Das Dachsystem 2 gemäß Fig. 1 steht demzufolge lediglich symbolisch für das Schiebedachsystem 2a oder das Schiebedachsystem 2b.

Das Schiebedachsystem 2a nach den Fig. 2 bis 4 weist einen Trägerrahmen 3a auf, der einen Rahmenausschnitt umgrenzt. Der Rahmenausschnitt des Trägerrahmens 3a ist durch zwei Dachelemente 4a, 5a verschließbar, von denen ein Dachelement 4a als bewegliches Dachelement gestaltet ist. Das Dachelement 4a ist unter Freigabe eines Teilbereichs des Rahmenausschnittes des Trägerrahmens 3a aus einer Schließstellung gemäß Fig. 2 in eine schräg nach oben angestellte Lüfterstellung sowie in eine über das - in Fahrzeuglängsrichtung gesehen - hintere Dachelement 5a hinweg verfahrene Öffnungsstellung überführbar. Zur Verlagerung des beweglichen Dachteiles 4a zwischen der Schließstellung, der Lüfterstellung und der Öffnungsstellung ist ein nicht näher bezeichnetes Antriebssystem vorgesehen, dass ebenfalls in dem Trägerrahmen 3a integriert ist. In Abstand hinter dem hinteren Dachelement 5a ist an dem Trägerrahmen 3a eine Beschattungsvorrichtung 6a befestigt, die eine fahrzeuginnenraumseitige Beschattung der aus Glas bestehenden Dachelemente 4a, 5a ermöglicht.

Der Trägerrahmen 3a ist an seinen gegenüberliegenden Längsseiten mit jeweils einer Wasserrinne 7a versehen, die die Dachelemente 4a, 5a auf gegenüberliegenden Seiten flankieren. Zudem weist der Trägerrahmen 3a auch im Bereich einer Rückseite und im Bereich einer Frontseite jeweils eine nicht näher bezeichnete Wasserrinne auf, die in die Wasserrinnen 7a übergehen. Den Wasserrinnen 7a sind Abläufe A zugeordnet, die in montiertem Zustand des Schiebedachsystems 2a im Dachbereich 1 des Personenkraftwagens mit Schlauchleitungen verbunden sind, die durch Karosseriesäulen der Fahrzeugkarosserie hindurch eine Ableitung von in den Wasserrinnen 7a gesammeltem Wasser zu einer Fahrzeugunterseite ermöglichen.

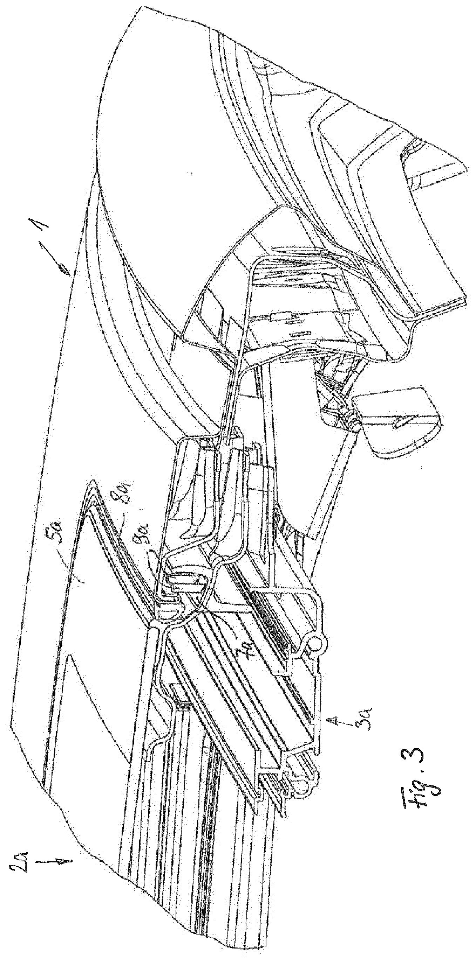

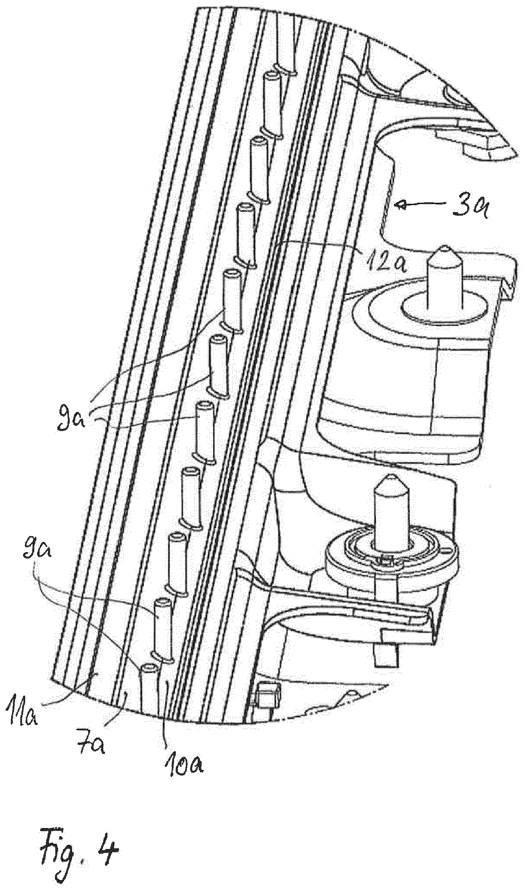

Die beiden in Fahrzeuglängsrichtung erstreckten Wasserrinnen 7a des Trägerrahmens 3a weisen, wie anhand der Fig. 3 und 4 erkennbar ist, jeweils einen Boden 10a sowie auf gegenüberliegenden Längsseiten eine Seitenwandung 11a und eine Seitenwandung 12a auf. Der Boden 10a und die Seitenwandungen 11a und 12a gehen einstückig ineinander über und definieren die Rinnenform der Wasserrinne 7a.

Anhand der Fig. 3 und 4 ist auch erkennbar, dass jede der beiden Wasserrinnen 7a mit einer Reihe von in Längsrichtung der Wasserrinne 7a gleichmäßig hintereinander angeordneten Schwallschutzkörpern 9a versehen ist, die beim dargestellten Ausführungsbeispiel als zylindrische Strömungspfosten gestaltet sind. Die als Schwallschutzkörper 9a gestalteten Strömungspfosten sind in einer Reihe hintereinander in gleichmäßigen Abständen zueinander in Längsrichtung der Wasserrinne 7a angeordnet und ragen parallel zueinander in Fahrzeughochrichtung von dem Boden 10a der Wasserrinne 7a aus nach oben ab. Die als Schwallschutzkörper 9a dienenden Strömungspfosten sind fest mit dem Boden 10a der Wasserrinne 7a verbunden, insbesondere einstückig mit dem Boden 10a ausgeformt. Die Strömungspfosten sind mittig zwischen den gegenüberliegenden Seitenwandungen 11a, 12a positioniert und weisen einen Durchmesser auf, der wesentlich geringer ist als eine Breite des Bodens 10a - in Fahrzeugquerrichtung gesehen. Der Boden 10a erstreckt sich demzufolge jeweils beidseitig jedes Strömungspfostens durchgängig in Längsrichtung entlang der Wasserrinne 7a, so dass etwaiges Wasser in der Wasserrinne 7a die Strömungspfosten beidseitig umströmen kann. Die als Schwallschutzkörper 9a dienenden Strömungspfosten gewährleisten, dass sich die Wasserströmung innerhalb der Wasserrinne 7a bricht und sich demzufolge keine großen Wellen in Längsrichtung der Wasserrinne 7a aufbauen können. Die als Schwallschutzkörper 9a dienenden Strömungspfosten erstrecken sich jeweils über eine gesamte Höhe der Wasserrinne 7a bis zu einem oberen Randbereich der Seitenwandungen 11a, 12a.

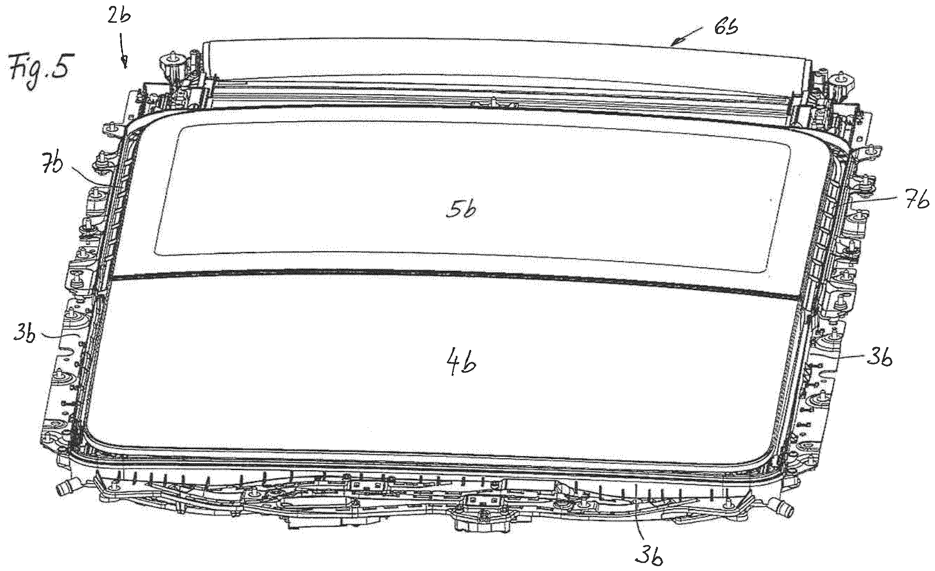

Das Schiebedachsystem 2b gemäß den Fig. 5 bis 7 entspricht im Wesentlichen dem zuvor anhand der Fig. 2 bis 4 beschriebenen Schiebedachsystem 2a. Zur Vermeidung von Wiederholungen wird nachfolgend daher lediglich auf die Unterschiede des Schiebedachsystems 2b gegenüber dem Schiebedachsystem 2a nach den Fig. 2 bis 4 eingegangen. Funktionsgleiche Teile und Abschnitte des Schiebedachsystems 2b sind mit gleichen Bezugszeichen unter Austausch des Buchstabens a durch den Buchstaben b versehen. Wesentlicher Unterschied bei dem Schiebedachsystem 2b nach den Fig. 5 bis 7 ist es, dass die in Längsrichtung an gegenüberliegenden Seiten des Trägerrahmens 3b vorgesehenen Wasserrinnen 7b mit Schwallschutzkörpern 9b versehen sind, die unterschiedlich gestaltet sind zu den als Strömungspfosten gestalteten Schwallschutzkörpern 9a des Schiebedachsystems 2a.

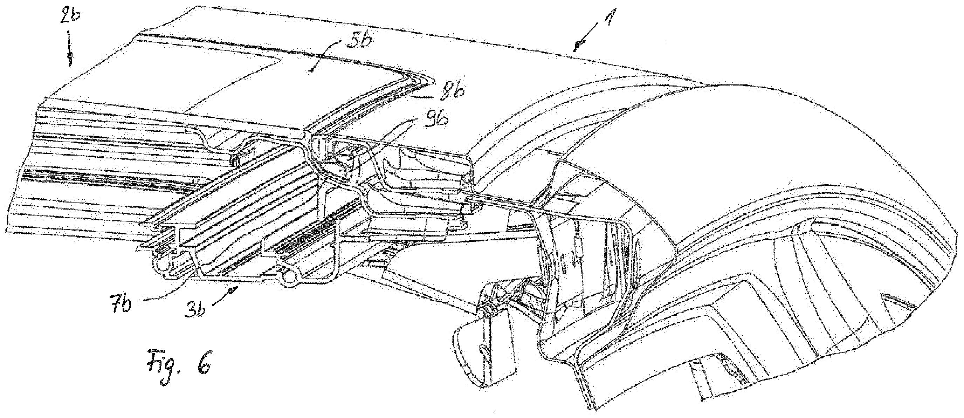

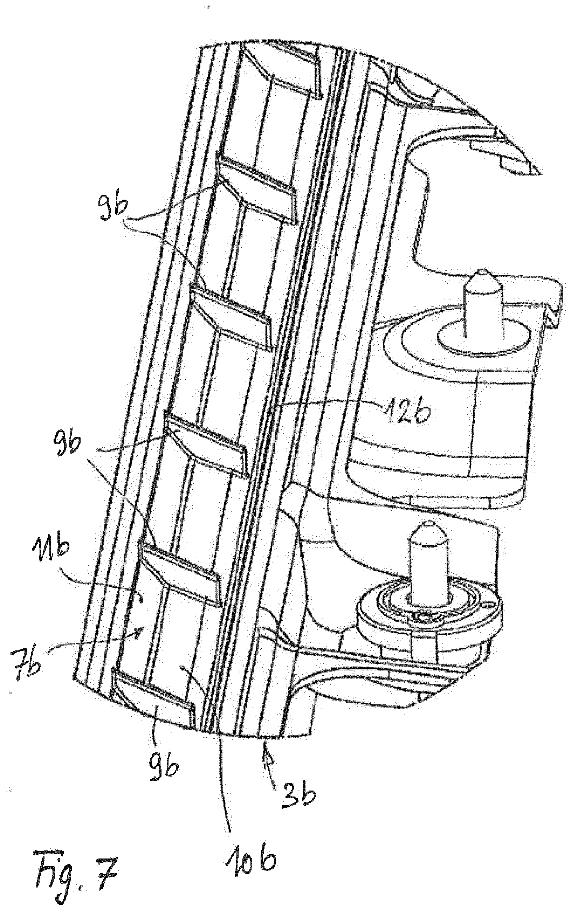

Wie anhand der Fig. 6 und 7 gut erkennbar ist, sind die Schwallschutzkörper 9b als Teilschotte gestaltet. Die Teilschotte werden durch Querstege gebildet, die ausgehend von der einen Seitenwandung 11b sich quer zur Längsrichtung der Wasserrinne 7b über einen Teilbereich der Breite der Wasserrinne 7b erstrecken. Jedes Teilschott schließt an die in Fig. 7 linke Seitenwandung 11b an und endet in Abstand zu der in Fig. 7 rechten Seitenwandung 12b. Hierdurch erstreckt sich der Boden 10b der Wasserrinne 7b an jedem Teilschott vorbei durchgängig, wodurch entsprechendes Wasser in der Wasserrinne 7b zwischen dem jeweiligen Teilschott und der in Fig. 7 rechten Seitenwandung 12b auf dem Boden 10b entlangfließen kann. Die Teilschotte bilden stegförmige Querwände, die durchgängig bündig über eine gesamte Höhe der Wasserrinne 7b an die in Fig. 7 linke Seitenwandung 11b und an den Boden 10b anschließen. Vorzugsweise sind die Teilschotte einstückig mit der Wasserrinne 7b.

Die Teilschotte sind in gleichmäßigen Abständen zueinander über einen Teilbereich einer Länge der Wasserrinne 7b verteilt angeordnet und parallel zueinander in Fahrzeugquerrichtung ausgerichtet. Die Teilschotte ragen rechtwinklig zu dem Boden 10b der Wasserrinne 7b nach oben ab. Zwischen den benachbarten Teilschotten ergeben sich für strömendes Wasser Kammern, die die Wasserströmung bremsen und somit als Schwallbrecher dienen. Insbesondere bei Verzögerungen oder Beschleunigungen des Personenkraftwagens, die in Fahrzeuglängsrichtung wirken, wird in der jeweiligen Wasserrinne 7b in Fahrzeuglängsrichtung strömendes Wasser am Aufbau von wellenförmigen Wassermengen gehindert, so dass entsprechendes Wasser nicht über entsprechende Seitenwandungen 11b, 12b der jeweiligen Wasserrinne 7b heraustreten kann.

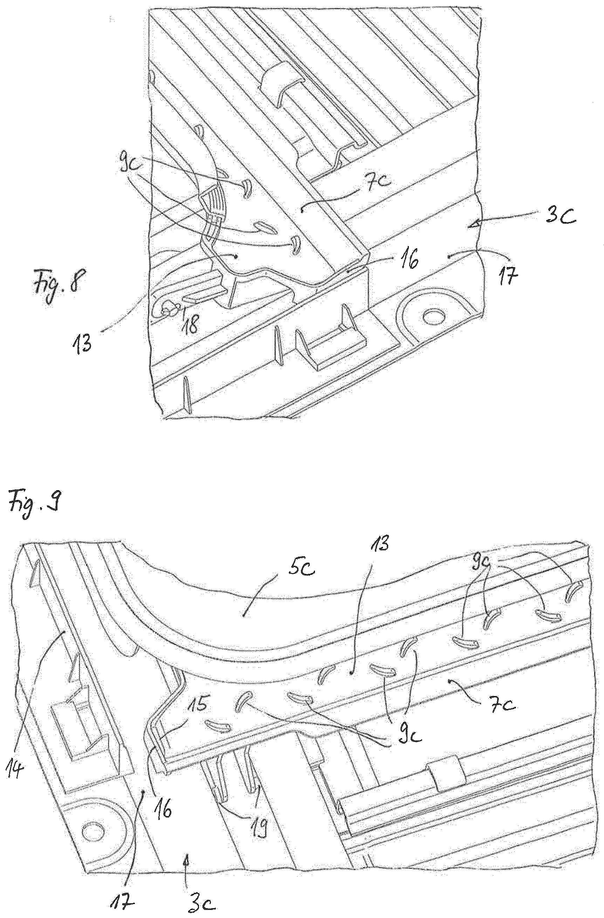

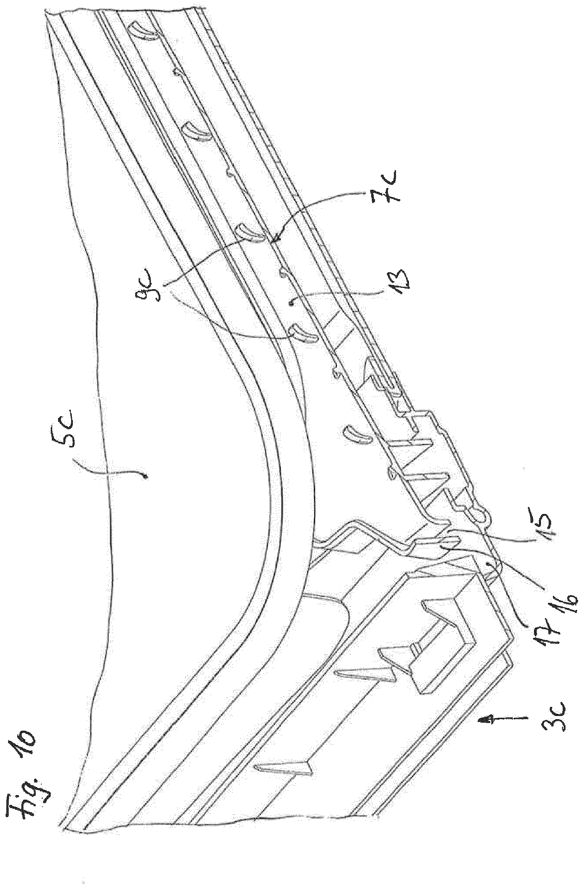

Ein Dachsystem gemäß den Fig. 8 bis 10 weist ein Dachelement 5c auf, das beidseitig mittels einer Verlagerungsmechanik entlang von zwei Führungsschienenanordnungen verlagerbar ist, die in dem Trägerrahmen 3c integriert sind. Die Führungsschienenanordnungen sind auf gegenüberliegenden Längsseiten des Trägerrahmens 3c vorgesehen und Bestandteile des Trägerrahmens 3c. Jede Verlagerungsmechanik weist jeweils einen hinteren Ausstellhebel 18 auf, der zum Anheben, Absenken und Längsverlagern des Dachelementes 5c vorgesehen ist. An den beiden hinteren Ausstellhebeln 18, von denen anhand der Fig. 8 und 9 lediglich ein - in normaler Fahrtrichtung gesehen - linker Ausstellhebel 18 gezeigt ist, erstreckt sich eine Wasserrinne 7c in Querrichtung des Dachsystems. Die Wasserrinne 7c ist unterhalb einer rückseitigen Stirnkante des beweglichen Dachelementes 5c positioniert und erstreckt sich - in Längsrichtung des Dachsystems - über einen hinteren Stirnrand des Dachelementes 5c hinaus, um auf dem Dachelement 5c angesammeltes Wasser auffangen zu können. Anhand der Fig. 8 und 9 ist erkennbar, dass die Wasserrinne 7c an ihren gegenüberliegenden Endbereichen jeweils mit nicht näher bezeichneten Befestigungsprofilierungen versehen ist, mittels der die Wasserrinne 7c mit dem jeweiligen Ausstellhebel 18 verbunden ist. Die Befestigungsprofilierungen erstrecken sich rückseitig (siehe Fig. 9) bis zu einem Schwenkgelenk 19 des hinteren Ausstellhebels 18. Der jeweilige hintere Ausstellhebel 18 ist in der entsprechenden Führungsschienenanordnung längsverlagerbar geführt. Zur Verlagerung der jeweiligen Verlagerungsmechanik ist ein Antriebssystem vorgesehen, wie es zuvor bereits anhand der Ausführungsformen gemäß den Fig. 1 bis 7 ausgeführt worden war.

Jede Führungsschienenanordnung weist seitlich außerhalb des Führungsschienenabschnittes für die jeweilige Verlagerungsmechanik einen wasserführenden Längsabschnitt 17 auf, der anhand der Fig. 8 bis 10 gut erkennbar ist. Die Wasserrinne 7c ist an dem einen Endbereich (siehe Fig. 8 bis 10) mit einem Abfluss 15 versehen, der stirnseitig der Wasserrinne 7c durch eine Prallwand 16 flankiert ist, die einen Stirnrandbereich der Wasserrinne 7c definiert. Der Abfluss 15 ist zu dem wasserführenden Längsabschnitt 17 des Trägerrahmens 3c hin offen, so dass eine Ableitung entsprechenden Wassers aus der Wasserrinne 7c in den wasserführenden Längsabschnitt 17 erfolgen kann.

Die Wasserrinne 7c selbst ist mit einer Bodenfläche 13 versehen, von der aus mehrere in Längsrichtung hintereinander und versetzt zueinander angeordnete Schwallschutzkörper 9c in Form von Noppen angeordnet sind. Die als Schwallschutzkörper 9c dienenden Noppen sind einstückig aus der Bodenfläche 13 der Wasserrinne 7c ausgeformt und ragen nach oben ab. Wie anhand der Fig. 8 bis 10 erkennbar ist, sind die Schwallschutzkörper 9c relativ zu einer Längserstreckung der Wasserrinne 7c, d. h. in Querrichtung des Dachsystems gesehen, schräg ausgerichtet, wobei die Schwallschutzkörper zum einen in Längsrichtung versetzt zueinander ausgerichtet sind, um zwei Reihen von Schwallschutzkörpern 9c zu bilden. Zum anderen sind die beiden Reihen von Schwallschutzkörpern 9c in Längsrichtung gesehen gegensinnig und schräg zueinander ausgerichtet und jeweils auf Lücke angeordnet. Dies bedeutet, dass die Schwallschutzkörper 9c nicht auf einer Höhe, sondern vielmehr entlang der Wasserrinne 7c hintereinander angeordnet sind. Jeder Schwallschutzkörper 9c ist nach Art eines gekrümmten Steges gestaltet, wobei die zwei Reihen von Schwallschutzkörpern jeweils alternierend gegensinnig zueinander gekrümmt sind. Zudem weist jeder Schwallschutzkörper 9c in Längsrichtung der Wasserrinne 7c zum Abfluss 15 hin eine sich stetig reduzierende Höhe auf, wodurch die Schwallschutzkörper 9c nach Art von gekrümmten Keilstegen ausgeführt sind.

Der Abfluss 15 definiert einen langlochartigen Stutzen, dessen Längserstreckung parallel zu einer Längserstreckung des Rahmenabschnittes 17 der Führungsschienenanordnung des Trägerrahmens 3c verläuft.

## Patentansprüche

1. Dachsystem für einen Personenkraftwagen, das in montiertem Zustand in einen Dachausschnitt eines Dachbereichs (1) des Personenkraftwagens eingefügt und fest mit entsprechenden Abschnitten einer Fahrzeugkarosserie im Dachbereich (1) verbunden ist, mit einem Trägerrahmen (3a), der wenigstens ein Dachelement (4a, 5a) trägt, sowie mit einem Entwässerungssystem, das wenigstens eine Wasserrinne (7a) aufweist, wobei die Wasserrinne zumindest über einen Teil ihrer Länge mit mehreren, in Längsrichtung der Wasserrinne (7a, 7c) zueinander beabstandeten Schwallschutzkörpern (9a, 9c) versehen ist, die jeweils über einen Teilbereich einer Breite und/oder einer Höhe der Wasserrinne (7a, 7c) erstreckt sind und zumindest einen Teilabschnitt eines Bodens (10a, 13) der Wasserrinne (7a, 7c) freilassen, **dadurch gekennzeichnet, dass** die Schwallschutzkörper (9a) als zylindrisch ausgeführte Strömungspfosten gestaltet sind, die von einem Boden (10a) der Wasserrinne (7a) aus nach oben abragen.

2. Dachsystem für einen Personenkraftwagen, das in montiertem Zustand in einen Dachausschnitt eines Dachbereichs (1) des Personenkraftwagens eingefügt und fest mit entsprechenden Abschnitten einer Fahrzeugkarosserie im Dachbereich (1) verbunden ist, mit einem Trägerrahmen (3c), der wenigstens ein Dachelement (5c) trägt, sowie mit einem Entwässerungssystem, das wenigstens eine Wasserrinne (7c) aufweist, wobei die Wasserrinne (7c) zumindest über einen Teil ihrer Länge mit mehreren, in Längsrichtung der Wasserrinne (7c) zueinander beabstandeten Schwallschutzkörpern (9c) versehen ist, die jeweils über einen Teilbereich einer Breite und/oder einer Höhe der Wasserrinne (7c) erstreckt sind und zumindest einen Teilabschnitt eines Bodens (13) der Wasserrinne (7c) freilassen, **dadurch gekennzeichnet, dass** die Schwallschutzkörper (9c) als von einer Bodenfläche (13) der Wasserrinne (7c) nach oben abragenden Noppen gestaltet sind, die alternierend in unterschiedlichen Richtungen ausgerichtet sind, dass die Noppen in Längsrichtung der Bodenfläche (13) der Wasserrinne (7c) alternierend versetzt zu einander schräg ausgerichtet sind, dass die Noppen als längserstreckte Stege gestaltet sind, und dass die Noppen alternierend gegensinnig zueinander gekrümmt sind.

3. Dachsystem nach einem der vorhergehenden Ansprüche, **dadurch gekennzeichnet, dass** der Boden (10a, 13) der Wasserrinne (7a, 7c) auf wenigstens einer Seite jedes Schwallschutzkörpers (9a, 9c) durchgängig in Längsrichtung der Wasserrinne (7a, 7c) fortgeführt ist.

4. Dachsystem nach einem der vorhergehenden Ansprüche, **dadurch gekennzeichnet, dass** die Wasserrinne (7a) fester Teil des Trägerrahmens (3a) ist.

5. Dachsystem nach einem der vorhergehenden Ansprüche, **dadurch gekennzeichnet, dass** die Wasserrinne (7c) dem Dachelement (5c) zugeordnet ist.

6. Dachsystem nach einem der vorhergehenden Ansprüche, **dadurch gekennzeichnet, dass** die Wasserrinne (7c) an einem Stirnendbereich mit einem Abfluss (15) versehen ist, der zu einem wasserführenden Längsabschnitt (17) einer Führungsschienenanordnung des Trägerrahmens (3c) hin offen ist.

7. Dachsystem nach einem der vorhergehenden Ansprüche, **dadurch gekennzeichnet, dass** der Abfluss (15) stirnendseitig der Wasserrinne (7c) durch eine Prallwand (16) flankiert ist.

## Claims

1. Roof system for a passenger motor vehicle which, in the assembled state, is fitted into a roof cutout in a roof region (1) of the passenger vehicle and is connected fixedly to corresponding portions of a vehicle body in the roof region (1), with a support frame (3a) which supports at least one roof element (4a, 5a) and with a drainage system which has at least one water gutter (7a), wherein the water gutter is provided at least over part of its length with a plurality of anti-surge bodies (9a, 9c) which are spaced apart from one another in the longitudinal direction of the water gutter (7a, 7c), are each extended over a partial region of a width and/or a height of the water gutter (7a, 7c) and leave free at least a partial portion of a base (10a, 13) of the water gutter (7a, 7c),
**characterized in that**
the anti-surge bodies (9a) are designed as cylindrical flow posts which protrude upward from a base (10a) of the water gutter (7a).

2. Roof system for a passenger motor vehicle which, in the assembled state, is fitted into a roof cutout in a roof region (1) of the passenger vehicle and is connected fixedly to corresponding portions of a vehicle body in the roof region (1), with a support frame (3c) which supports at least one roof element (5c) and with a drainage system which has at least one water gutter (7c), wherein the water gutter (7c) is provided at least over part of its length with a plurality of anti-surge bodies (9c) which are spaced apart from one another in the longitudinal direction of the water gutter (7c), are each extended over a partial region of a width and/or a height of the water gutter (7c) and leave free at least a partial portion of a base (13) of the water gutter (7c), **characterized in that**
the anti-surge bodies (9c) are designed as pimples which protrude upward from a base surface (13) of the water gutter (7c) and are oriented in an alternating manner in different directions, **in that** the pimples are oriented obliquely offset with respect to one another in an alternating manner in the longitudinal direction of the base surface (13) of the water gutter (7c), **in that** the pimples are designed as longitudinally extended webs, and **in that** the pimples are curved in an opposite direction to one another in an alternating manner.

3. Roof system according to any of the preceding claims, **characterized in that** the base (10a, 13) of the water gutter (7a, 7c) is carried on continuously in the longitudinal direction of the water gutter (7a, 7c) on at least one side of each anti-surge body (9a, 9c).

4. Roof system according to any of the preceding claims, **characterized in that** the water gutter (7a) is a fixed part of the support frame (3a).

5. Roof system according to any of the preceding claims, **characterized in that** the water gutter (7c) is assigned to the roof element (5c).

6. Roof system according to any of the preceding claims, **characterized in that** the water gutter (7c) is provided at a front end region with a discharge (15) which is open toward a water-conducting longitudinal portion (17) of a guide rail arrangement of the support frame (3c).

7. Roof system according to any of the preceding claims, **characterized in that** the discharge (15) on the front end side of the water gutter (7c) is flanked by an impact wall (16).

## Revendications

1. Système de toit pour un véhicule automobile de tourisme, le système à l'état monté étant inséré dans une ouverture de toit d'une partie de toit (1) du véhicule automobile et relié fixement à des sections correspondantes d'une carrosserie de véhicule dans la partie de toit (1), comportant un cadre support (3a) supportant au moins un élément de toit (4a, 5a) ainsi qu'un système de drainage comprenant au moins une gouttière (7a), dans lequel la gouttière est pourvue, au moins sur une partie de sa longueur, d'une pluralité de corps de protection contre la crue (9a, 9c) espacés l'un de l'autre dans la direction longitudinale de la gouttière (7a, 7c), chacun des corps de protection s'étendant sur une zone partielle d'une largeur et/ou d'une hauteur de la gouttière (7a, 7c) et laissant libre au moins une section partielle d'un fond (10a, 13) de la gouttière (7a, 7c),
**caractérisé en ce que**
les corps de protection contre la crue (9a) sont conçus sous forme de postes d'écoulement cylindriques se dressant vers le haut à partir d'un fond (10a) de la gouttière (7a).

2. Système de toit pour un véhicule automobile de tourisme, le système à l'état monté étant inséré dans une ouverture de toit d'une partie de toit (1) du véhicule automobile et relié fixement à des sections correspondantes d'une carrosserie de véhicule dans la partie de toit (1), comportant un cadre support (3c) supportant au moins un élément de toit (5c) ainsi qu'un système de drainage comprenant au moins une gouttière (7c), dans lequel la gouttière (7c) est pourvue, au moins sur une partie de sa longueur, d'une pluralité de corps de protection contre la crue (9c) espacés l'un de l'autre dans la direction longitudinale de la gouttière (7c), chacun des corps de protection s'étendant sur une zone partielle d'une largeur et/ou d'une hauteur de la gouttière (7c) et laissant libre au moins une section partielle d'un fond (13) de la gouttière (7c), **caractérisé en ce que**
les corps de protection contre la crue (9c) sont conçus sous forme de bouchons se dressant vers le haut à partir d'une surface de fond (13) de la gouttière (7c), les bouchons étant orientés en alternance vers directions différentes, **en ce que** les bouchons dans la direction longitudinale de la surface de fond (13) de la gouttière (7c) sont orientés obliquement et décalés en alternance l'un de l'autre, **en ce que** les bouchons sont configurés sous forme d'arêtes allongées, et **en ce que** les bouchons sont incurvés en alternance en sens inverse l'un à l'autre.

3. Système de toit selon l'une quelconque des revendications précédentes, **caractérisé en ce que** le fond (10, 13) de la gouttière (7a, 7c), sur au moins un côté de chaque corps de protection contre la crue (9a, 9c), est continué constamment dans la direction longitudinale de la gouttière (7a, 7c).

4. Système de toit selon l'une quelconque des revendications précédentes, **caractérisé en ce que** la gouttière (7a) est une partie fixe du cadre support (3a).

5. Système de toit selon l'une quelconque des revendications précédentes, **caractérisé en ce que** la gouttière (7c) est associée à l'élément de toit (5c).

6. Système de toit selon l'une quelconque des revendications précédentes, **caractérisé en ce que** la gouttière (7c) est pourvue d'un drain (15) sur une zone d'extrémité frontale, le drain étant ouvert vers une section longitudinale (17) guidant de l'eau d'un agencement de rails de guidage du cadre support (3c).

7. Système de toit selon l'une quelconque des revendications précédentes, **caractérisé en ce que** le drain (15) est encadré par une paroi à choc (16) au côté d'extrémité frontale de la gouttière (7c).
